# FASCICULE DE BREVET EUROPEEN

(11) **EP 2 059 714 B1**
(45) Date de publication et mention de la délivrance du brevet: **17.07.2013**
(21) Numéro de dépôt: 07823747.6
(22) Date de dépôt: 28.08.2007
(51) Int. Cl.: F16S 1/02, B64C 7/00, E04B 1/61, B64C 3/26

(54) **PROCEDE DE REALISATION D'UN ASSEMBLAGE DE PANNEAUX**
VERFAHREN ZUR HERSTELLUNG EINER TAFELANORDNUNG
METHOD FOR MANUFACTURING A PANEL ASSEMBLY

(30) Priorité: 08.09.2006 FR 0653622
(43) Date de publication de la demande: 20.05.2009
(73) Titulaire: AIRBUS OPERATIONS (S.A.S), 31060 Toulouse (FR)
(72) Inventeur: DELORT, Pierre, F-31170 Tournefeuille (FR)
(74) Mandataire: Schmit, Christian Norbert Marie
(86) Numéro de dépôt international: PCT/FR2007/051848
(87) Numéro de publication internationale: WO 2008/029048

(56) Documents cités:
- FR-A- 1 252 603
- US-A- 3 699 735
- US-A- 3 729 124
- US-A- 4 067 155
- US-A- 5 076 035

## Description

L'invention concerne un assemblage de panneaux, tel que des panneaux formant la peau externe d'un carénage ventral d'aéronef. Plus précisément, l'invention concerne un joint d'étanchéité destiné à rendre étanche la liaison entre deux panneaux adjacents d'un tel assemblage.

Dans le domaine de l'aéronautique, il est connu de munir les aéronefs d'un carénage ventral. Le carénage ventral, ou ventre mou, comporte un assemblage de panneaux extérieurs formant la peau externe du carénage. Le carénage ventral est soumis à de nombreuses déformations thermiques et mécaniques, tant au moment du montage du carénage que lors des utilisations successives de l'aéronef correspondant. En particulier, les panneaux de la peau externe du carénage ventral tendent à se déformer. Par exemple, la distance entre deux panneaux adjacents peut augmenter ou diminuer en fonction des contraintes auxquelles le carénage ventral est soumis.

Il est connu, de manière à rendre la liaison entre deux panneaux adjacents étanche, de disposer un joint d'étanchéité dans l'intervalle existant entre les deux panneaux adjacents.

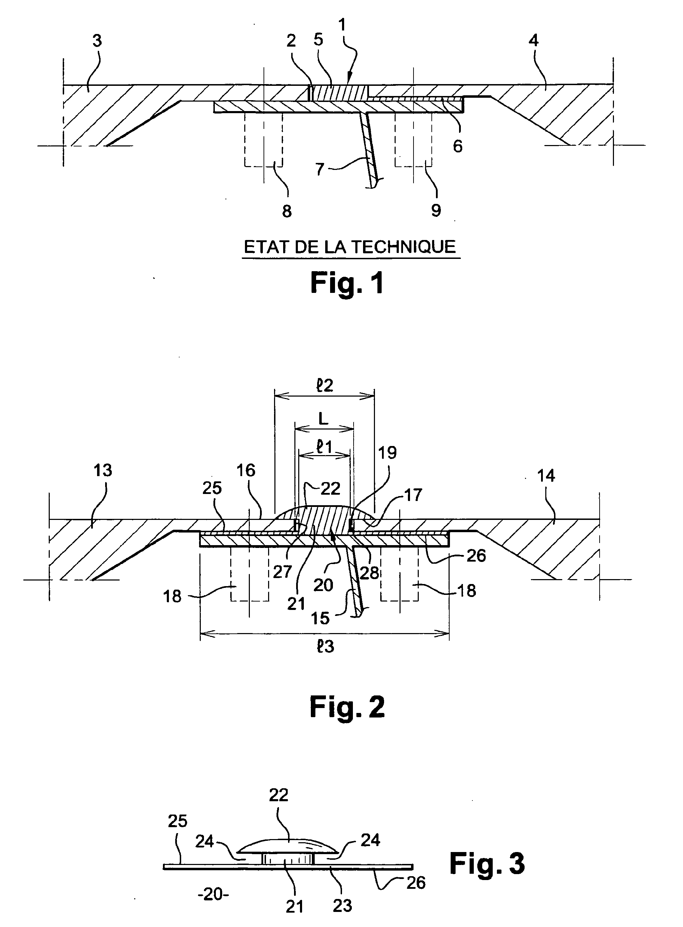

Sur la figure 1 de l'état de la technique, un tel joint d'étanchéité 1 comble un intervalle 2 situé entre un premier 3 et un deuxième 4 panneau externe du carénage ventral d'un aéronef. Le joint d'étanchéité 1 comporte une partie centrale 5 qui comble l'intervalle 2 et une partie interne 6 de fixation, s'étendant dans un même plan et parallèlement à la partie centrale 5. Une épaisseur de la partie centrale 5 est strictement supérieure à une épaisseur de la partie interne 6, de sorte que lesdites parties 5, 6 forment deux plateaux successifs. Par épaisseur, on entend la dimension s'étendant verticalement par rapport aux panneaux externes 3, 4.
Les panneaux 3, 4 sont fixés l'un à l'autre par l'intermédiaire d'une pièce support 7. Plus précisément, la pièce support 7 est fixée par un premier moyen de fixation 8 au premier panneau 3 et par un second moyen de fixation 9 au second panneau 4. La partie interne 6 du joint 1 est comprimée entre la pièce support 7 et le second panneau 4 du carénage. La partie interne 6 du joint 1 étant traversée par le moyen de fixation 9, le joint 1 est partiellement fixé aux panneaux.

Lors du montage de deux panneaux 3, 4 du carénage, on découpe la partie centrale 5 aux dimensions de l'intervalle 2 obtenu au montage. Les dimensions de l'intervalle 2 vont varier au cours de l'assemblage de l'ensemble des panneaux du carénage, puis au cours de l'utilisation dudit carénage. Lorsque des efforts en compression rapprochent les panneaux 3 et 4 l'un de l'autre, l'intervalle 2 est diminué ce qui peut aboutir à une compression de la partie centrale 5 du joint 1. A l'inverse, lorsque l'espace 2 est augmenté du fait d'un écartement des panneaux 3 et 4 de la peau externe du carénage ventral, la partie centrale 5 du joint d'étanchéité ne permet plus de combler entièrement l'intervalle 2. Dans ce cas, la présence d'une gorge entre la partie centrale 5 et le bord d'attaque d'un des panneaux, peut être à l'origine de bruits et de sifflements et créer une traînée aérodynamique. Par ailleurs, l'écoulement de l'air sur la peau externe du carénage ventral peut faire sortir la partie centrale 5 du joint d'étanchéité 1 hors de l'intervalle 2 et arracher tout ou partie dudit joint 1.

Dans **l'état** de la technique, on connaît l'enseignement des documents US-A-3 699 735, FR-A-1 252 603, US-A-3 279 124, US-A-4 067 155 et US-A-5 076 035.

Dans l'invention, on cherche d'une manière générale à fournir un assemblage de panneaux apte à supporter des dispersions de fabrications. Dans le cas d'un assemblage de panneaux destinés à former tout ou partie d'une pièce d'aéronef tel qu'un carénage, on cherche à minimiser l'impact du jeu pouvant exister entre les panneaux sur la trainée aérodynamique engendrée par la pièce d'aéronef. On cherche également à améliorer le profil aérodynamique d'une pièce d'aéronef. Un autre but de l'invention est d'assurer l'étanchéité de la liaison entre deux panneaux adjacents d'un assemblage de panneaux, quelles que soient les conditions d'utilisation dudit assemblage, et plus précisément quelles que soient les contraintes auxquelles ledit assemblage est soumis.

Pour cela, dans l'invention, on propose d'utiliser un joint d'étanchéité apte à recouvrir les bords adjacents de deux panneaux considérés, lesdits bords adjacents participant à la liaison des deux panneaux. Plus précisément, le joint selon l'invention comble au moins partiellement l'espace ménagé entre les deux panneaux considéré, tout en masquant la surface externe du bord de chacun des deux panneaux bordant ledit espace. Ainsi l'espace ménagé entre les deux panneaux est au moins partiellement comblé par une portion centrale du joint, tandis qu'une portion supérieure du joint recouvre entièrement la surface supérieure dudit espace, et même au-delà, de part et d'autre dudit espace. Même lorsque la distance entre les deux panneaux considérés augmente, augmentant la largeur de l'espace entre lesdits panneaux, l'espace continue d'être entièrement recouvert pas la partie couvrante du joint d'étanchéité. Aucune gorge dans laquelle de l'air pourrait s'engouffrer n'est créée. La présence de cette partie couvrante du joint d'étanchéité permet par ailleurs de supprimer les risques d'érosion des bords d'attaque des panneaux. De plus, du fait du profil aérodynamique de cette partie couvrante, on supprime tout risque de traînée dynamique au niveau de la liaison entre les deux panneaux adjacents. Une telle solution permet également une simplification du montage d'un assemblage de panneaux destiné par exemple à former un carénage, puisque les réglages et dimensionnements entre les panneaux ne doivent plus être précisément déterminés avant le montage. En effet, la présence de la partie couvrante dans le joint d'étanchéité permet d'augmenter les tolérances de montage et de dimensionnement. La solution selon l'invention s'adapte directement aux panneaux de carénage ventral tels qu'ils existent actuellement, sans aucune modification préalable de leur structure.

L'invention a donc pour objet un procédé de réalisation d'un assemblage étanche de panneaux d'un appareil de type aéronef, lesdits panneaux étant adaptés à se déformer, dans lequel deux panneaux adjacents sont fixés l'un à l'autre, caractérisé en ce qu'il comporte les étapes suivantes :
- choisir un joint d'étanchéité en fonction d'un interstice maximum et un interstice minimum entre les deux panneaux adjacents, aptes à être tolérés par l'assemblage de panneaux,
- utiliser un joint d'étanchéité comportant une partie centrale dont des dimensions sont inférieures aux dimensions de l'interstice minimum, et une partie externe, destinée à être dirigée vers l'extérieur du carénage, dont des dimensions sont strictement supérieures aux dimensions de l'interstice maximum, de manière à pouvoir recouvrir au moins partiellement les rebords longitudinaux des panneaux bordant l'interstice,
- positionner et solidariser
- le joint d'étanchéité à un premier des panneaux par l'intermédiaire d'un raidisseur, de manière à ce que la partie externe dudit joint recouvre un rebord longitudinal dudit panneau, et
- le second des panneaux au premier panneau, en ménageant un interstice, compris entre l'interstice maximum et l'interstice minimum, entre les deux rebords longitudinaux attenants des panneaux, en logeant la partie centrale du joint d'étanchéité dans l'interstice, le rebord longitudinal du second panneau bordant l'interstice étant recouvert de la partie externe du joint d'étanchéité, et
- fixer le premier panneau et une partie interne du joint d'étanchéité au raidisseur, de manière à ce que la partie interne du joint d'étanchéité soit maintenue entre le raidisseur et le premier panneau.

Les panneaux sont montés l'un après l'autre sur la pièce support. Un des deux panneaux est d'abord positionné par rapport au joint, puis le second panneau est positionné également par rapport au joint. En positionnant le second panneau, on ménage l'interstice aux dimensions voulues, tout en s'assurant que les rebords longitudinaux bordant l'interstice sont bien recouverts par le joint.

Selon des caractéristiques particulières, ledit procédé comporte les étapes supplémentaires suivantes :
- glisser le rebord longitudinal d'intérêt du second panneau entre la partie interne et la partie externe du joint d'étanchéité, de manière à ce que ladite partie interne du joint d'étanchéité soit située entre le raidisseur et ledit rebord longitudinal ;
- fixer le second panneau audit raidisseur, de manière à ce que ladite partie interne du joint d'étanchéité soit maintenue entre ledit raidisseur et le rebord longitudinal du second panneau.

Selon des caractéristiques particulières, la partie interne du joint d'étanchéité est également fixée au raidisseur.

L'invention concerne également un assemblage de panneaux d'un appareil de type aéronef, lesdits panneaux étant adaptés à se déformer, deux panneaux adjacents étant fixés l'un à l'autre par un joint d'étanchéité, caractérisé en ce que
- le joint d'étanchéité comporte une partie centrale dont des dimensions sont inférieures aux dimensions d'un interstice minimum entre les deux panneaux adjacents, et une partie externe, destinée à être dirigée vers l'extérieur du carénage, dont des dimensions sont strictement supérieures aux dimensions d'un interstice maximum, de manière à pouvoir recouvrir au moins partiellement les rebords longitudinaux des panneaux bordant l'interstice, lesdits interstices étant aptes à être tolérés par l'assemblage de panneaux,
- le joint d'étanchéité est apte à être positionné sur et solidarisé à un premier des panneaux par l'intermédiaire d'un raidisseur, de manière à ce que la partie externe dudit joint recouvre un rebord longitudinal dudit panneau,
- le second des panneaux est apte à être positionné sur et solidarisé au premier panneau, avec un interstice compris entre l'interstice maximum et l'interstice minimum entre les deux rebords longitudinaux attenants des panneaux, avec la partie centrale du joint d'étanchéité logée dans l'interstice, le rebord longitudinal du second panneau bordant l'interstice étant apte à être recouvert de la partie externe du joint d'étanchéité, et
- le premier panneau est apte à être fixé à une partie interne du joint d'étanchéité au raidisseur, de manière à ce que ladite partie interne soit maintenue entre le raidisseur et le premier panneau.

Par extérieur de l'assemblage, on entend la face destinée à être soumise aux contraintes et forces de l'environnement extérieur. Par exemple, dans le cas d'un assemblage formant un carénage ventral pour aéronef, la face extérieure est la face dirigée vers l'extérieur par rapport au volume interne du carénage, et qui est soumise à la traînée aérodynamique.

Grâce à l'invention, le contour des rebords longitudinaux est entièrement couvert par le joint d'étanchéité qui les enserre. Intérieur s'entend par opposition à l'extérieur.

Dans un exemple de réalisation particulier de l'invention, l'assemblage de panneau forme la peau externe d'un carénage ventral d'aéronef.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Une représentation schématique d'un carénage ventral au niveau de la liaison entre deux panneaux de la peau externe, muni d'un joint d'étanchéité de l'état de la technique déjà décrit ;
- Figure 2 : une représentation schématique d'un carénage ventral au niveau de la liaison entre deux panneaux de la peau externe, muni d'un joint d'étanchéité selon l'invention ;
- Figure 3 : une représentation schématique en coupe transversale d'un joint d'étanchéité selon l'invention ;
- Figure 4 : une représentation d'un aéronef muni d'un carénage pouvant être selon l'invention.

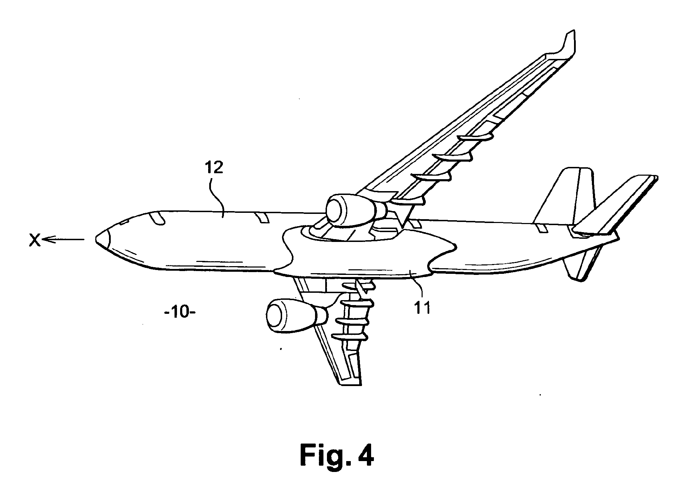

Comme cela est représenté sur la Figure 4, un aéronef 10 est muni d'un carénage ventral 11 situé au niveau d'une partie inférieure du fuselage 12. La peau externe du carénage ventral 11 est formée d'une pluralité de panneaux (non visibles sur la Figure 4) solidarisés les uns aux autres de manière à former une structure souple.

Sur la Figure 2 est représenté un agrandissement du carénage ventral 11 au niveau de la jonction entre deux panneaux 13 et 14 adjacents de la peau externe dudit carénage 11. Bien entendu, ces panneaux 13, 14 peuvent appartenir à n'importe quel autre assemblage de panneaux.

Les panneaux 13, 14 ont par exemple une forme générale rectangulaire. Les rebords longitudinaux 16, 17 attenants de chacun des deux panneaux 13, 14 s'étendent parallèlement l'un à l'autre. Les panneaux 13, 14 sont solidarisés l'un à l'autre par l'intermédiaire d'une structure support 15 telle qu'un raidisseur. Plus précisément, les rebords longitudinaux 16, 17 attenants des panneaux 13, 14 adjacents sont fixés au raidisseur 15 par l'intermédiaire d'un dispositif de fixation 18, tel qu'un écrou prisonnier.

Lors du montage des panneaux 13, 14 sur le raidisseur 15, on prévoit un interstice 19 entre les deux rebords longitudinaux 16 et 17 attenants de manière à avoir des tolérances de montage et à permettre la déformation des panneaux 13, 14 lors de l'utilisation du carénage ventral. L'interstice 19, bordé par les rebords longitudinaux 16, 17 est destiné à avoir une largeur L variable en fonction des contraintes de montage ainsi que des efforts en compréhension ou en extension subis par les panneaux 13 et 14. Par largeur, on entend la dimension de l'interstice 19 s'étendant entre les deux rebords longitudinaux 16, 17 attenants.

Pour rendre étanche la liaison entre les panneaux 13, 14 du carénage ventral, on utilise un joint d'étanchéité 20 apte à recouvrir entièrement l'interstice 19, quel que soit sa largeur. Le joint d'étanchéité 20 selon l'invention est muni d'une partie centrale 21 entièrement contenue dans l'interstice 19 et une partie externe 22, ou partie chapeau, dirigée vers l'extérieur du carénage 11, et apte à recouvrir au moins les bords d'attaque 27, 28 des bords longitudinaux 16, 17 attenants des panneaux 13, 14. Par bords d'attaque, on entend les côtés 27, 28 des rebords longitudinaux 16, 17 qui délimitent l'interstice 19. La partie externe 22 du joint 20 est solidaire de la partie centrale 21, qu'elle surplombe.

On choisit donc le joint d'étanchéité 20 en fonction de l'interstice 19 maximum et minimum qui peut exister entre les deux panneaux 13, 14 adjacents. Par interstices minimum et maximum, on entend les dimensions maximum et minimum que peut avoir l'interstice 19 au cours du montage et de l'utilisation du carénage ventral. Plus précisément, c'est la largeur L de l'interstice 19 qui est amenée à varier. On mesure donc la largeur maximum et la largeur minimum de l'interstice 19, afin d'adapter la largeur l1 de la partie centrale 21 du joint d'étanchéité 20 en conséquence.

Par exemple, la largeur l1 de la partie centrale 21 du joint d'étanchéité 20 est sensiblement égale à la largeur L de l'interstice 19 après montage des panneaux 13, 14. Ainsi, la largeur l1 de la partie centrale 21 du joint d'étanchéité 20 est strictement supérieure à la largeur L de l'interstice minimum, et strictement inférieure à la largeur L de l'interstice maximum.

La partie centrale 21 du joint 20 est apte à être comprimée par les rebords longitudinaux 16, 17 des panneaux 13, 14 lors du rétrécissement de l'interstice 19. A l'inverse, lorsque l'interstice 19 tend à avoir une largeur L sensiblement égale à la largeur de l'interstice maximum, la partie centrale 21 du joint d'étanchéité 20 tend à retrouver sa largeur l1 initiale, qui est alors strictement inférieure à la largeur L de l'interstice 19.

Cependant, l'ensemble du volume de l'interstice 19 reste recouvert par la partie couvrante 22 du joint d'étanchéité 20. En effet, les dimensions de la partie couvrante 22 du joint d'étanchéité 20 sont prévues pour pouvoir recouvrir entièrement l'interstice 19, depuis l'interstice minimum jusqu'à l'interstice maximum. Pour cela, la largeur l2 de la partie couvrante 22 du joint d'étanchéité 20 est strictement supérieure à la largeur de l'interstice maximum.

La partie couvrante 22 du joint d'étanchéité 20 présente un profil aérodynamique de manière à minimiser la traînée au niveau de la jonction entre les panneaux 13 et 14 du carénage ventral. Dans l'exemple représenté aux figures 2 et 3, la partie couvrante 22 a une forme légèrement bombée.

Le joint d'étanchéité 20 peut également comporter une partie interne 23, dirigée vers l'intérieur du carénage et solidaire de la partie centrale 21. La partie interne 23 est diamétralement opposée à la partie externe 22.

La largeur l3 de la partie interne 23 du joint d'étanchéité 20 est par exemple strictement supérieure à la largeur l1 de la partie externe 22, qui est elle-même strictement supérieure à la largeur l2 de la partie centrale 21. Le joint d'étanchéité 20 est donc formé de trois couches successives à savoir, une couche interne formée par la partie interne 23, une couche intermédiaire formée par la partie centrale 21 et une couche externe formée par la partie externe 22, de largeurs différentes. Ainsi une rainure 24 est ménagée à droite et à gauche de la partie centrale 21. Les rainures 24 sont délimitées respectivement par la partie externe 22 et la partie interne 23 du joint d'étanchéité 20.

Dans chacune de ces rainures 24 est logé le bord d'attaque 27, 28 d'un des rebords 16, 17 longitudinaux qui bordent l'interstice 19. Les bords d'attaque 27, 28 sont ainsi enserrés dans le joint d'étanchéité 20 et donc entièrement protégés des risques de corrosion.

Les risques d'arrachement du joint d'étanchéité 20 peuvent être supprimés en fixant le joint d'étanchéité 20 à au moins un des panneaux 13, 14. La forme aérodynamique de la partie couvrante 22 du joint 20 permet à l'air de glisser sur ledit joint, sans l'arracher.

Dans l'exemple représenté à la figure 2, le joint d'étanchéité 20 est fixé aux deux panneaux 13, 14. Pour cela un flanc gauche 25 et un flanc droit 26 de la partie interne 23 du joint d'étanchéité 20 sont respectivement solidarisés au premier et au deuxième panneau 13, 14. Par flanc droit et gauche, on entend les pans de la partie interne 23 du joint d'étanchéité 20 disposé respectivement à droite et à gauche de la partie centrale 21 du joint d'étanchéité 20. Les flancs gauche 25 et droit 26 de la partie interne 23 sont chacun comprimés entre le raidisseur 15 et le rebord longitudinal 16, 17 correspondant des panneaux 13, 14.

Il est également possible de prévoir de solidariser uniquement un des deux flancs 25, 26 au panneau 13, 14 correspondant, le deuxième flanc 25, 26 pouvant alors être simplement maintenu comprimé entre le raidisseur 15 et le panneau 13, 14 ou même ne pas exister.

Dans le cas où le joint d'étanchéité 20 est dépourvu de partie interne 23, il est possible de solidariser la partie externe 22 et/ou la partie centrale 21 aux panneaux 13, 14.

Le joint d'étanchéité peut par exemple être fabriqué par moulage.

## Revendications

1. Procédé de réalisation d'un assemblage étanche de panneaux d'un appareil de type aéronef, lesdits panneaux étant adaptés à se déformer, dans lequel deux panneaux adjacents (13, 14) sont fixés l'un à l'autre, **caractérisé en ce qu'**il comporte les étapes suivantes :
- choisir un joint d'étanchéité (20) en fonction d'un interstice maximum et un interstice minimum entre les deux panneaux adjacents (13, 14), aptes à être tolérés par l'assemblage de panneaux,
- utiliser un joint d'étanchéité (20) comportant une partie centrale (21) dont des dimensions (l1) sont inférieures aux dimensions (L) de l'interstice minimum, et une partie externe (22), destinée à être dirigée vers l'extérieur du carénage, dont des dimensions (l2) sont strictement supérieures aux dimensions (L) de l'interstice maximum, de manière à pouvoir recouvrir au moins partiellement les rebords longitudinaux (16, 17) des panneaux bordant l'interstice (19),
- positionner et solidariser
- le joint d'étanchéité à un premier des panneaux par l'intermédiaire d'un raidisseur (15), de manière à ce que la partie externe (22) dudit joint recouvre un rebord longitudinal dudit panneau, et
- le second des panneaux au premier panneau, en ménageant un interstice (19), compris entre l'interstice maximum et l'interstice minimum, entre les deux rebords longitudinaux attenants des panneaux, en logeant la partie centrale (21) du joint d'étanchéité dans l'interstice, le rebord longitudinal du second panneau bordant l'interstice étant recouvert de la partie externe (22) du joint d'étanchéité, et
- fixer le premier panneau et une partie interne (23) du joint d'étanchéité au raidisseur, de manière à ce que la partie interne (23) du joint d'étanchéité soit maintenue entre le raidisseur (15) et le premier panneau.

2. Procédé selon la revendication 1, **caractérisé en ce qu'**il comporte les étapes supplémentaires suivantes :
- glisser le rebord longitudinal d'intérêt du second panneau entre la partie interne (23) et la partie externe (22) du joint d'étanchéité (20), de manière à ce que ladite partie interne du joint d'étanchéité soit située entre le raidisseur (15) et ledit rebord longitudinal ;
- fixer le second panneau audit raidisseur, de manière à ce que ladite partie interne du joint d'étanchéité soit maintenue entre ledit raidisseur et le rebord longitudinal du second panneau.

3. Procédé selon la revendication 2, **caractérisé en ce que** la partie interne (23) du joint d'étanchéité (20) est également fixée au raidisseur (15).

4. Assemblage de panneaux d'un appareil de type aéronef, lesdits panneaux étant adaptés à se déformer, deux panneaux adjacents (13, 14) étant fixés l'un à l'autre par un joint d'étanchéité (20), **caractérisé en ce que**
- le joint d'étanchéité comporte une partie centrale (21) dont des dimensions (l1) sont inférieures aux dimensions (L) d'un interstice minimum entre les deux panneaux adjacents, et une partie externe (22), destinée à être dirigée vers l'extérieur du carénage, dont des dimensions (l2) sont strictement supérieures aux dimensions (L) d'un interstice maximum, de manière à pouvoir recouvrir au moins partiellement les rebords longitudinaux (16, 17) des panneaux bordant l'interstice (19), lesdits interstices étant aptes à être tolérés par l'assemblage de panneaux,
- le joint d'étanchéité est apte à être positionné sur et solidarisé à un premier des panneaux par l'intermédiaire d'un raidisseur (15), de manière à ce que la partie externe (22) dudit joint recouvre un rebord longitudinal dudit panneau,
- le second des panneaux est apte à être positionné sur et solidarisé au premier panneau, avec un interstice (19) compris entre l'interstice maximum et l'interstice minimum entre les deux rebords longitudinaux attenants des panneaux, avec la partie centrale (21) du joint d'étanchéité logée dans l'interstice, le rebord longitudinal du second panneau bordant l'interstice étant apte à être recouvert de la partie externe (22) du joint d'étanchéité, et
- le premier panneau est apte à être fixé à une partie interne (23) du joint d'étanchéité au raidisseur, de manière à ce que ladite partie interne (23) soit maintenue entre le raidisseur (15) et le premier panneau.

5. Aéronef comportant un assemblage de panneaux selon la revendication 4 formant peau externe d'un carénage ventral (11).

## Patentansprüche

1. Verfahren zur Herstellung eines dichten Verbundes von Paneelen eines Gerätes in der Art eines Luftfahrzeugs, wobei die besagten Paneele angepasst sind, um sich zu verformen, und bei dem zwei benachbarte Paneele (13, 14) miteinander verbunden sind, **dadurch gekennzeichnet, dass** es die folgenden Schritte umfasst:
- die Auswahl einer Dichtung (20) in Abhängigkeit von einer maximalen Spaltweite und einer minimalen Spaltweite zwischen den beiden benachbarten Paneelen (13, 14), die jeweils vom Paneelverbund toleriert werden,
- die Verwendung einer Dichtung (20) mit einem mittleren Abschnitt (21), dessen Abmessungen (l1) kleiner sind, als die Abmessungen (L) der Mindestspaltweite, und einem äußeren Abschnitt (22), der dazu bestimmt ist, an die Außenseite der Verkleidung geführt zu werden, und dessen Abmessungen absolut größer sind, als die Abmessungen (L) der maximalen Spaltweite, um die Längsränder (16, 17) der Paneele, die den Spalt (19) umgeben, zumindest teilweise abdecken zu können,
- das Positionieren und Verbinden
- der Dichtung an einem ersten Paneel mittels einer Versteifung (15), sodass der äußere Abschnitt (22) der besagten Dichtung einen Längsrand des besagten Paneels abdeckt, und
- des zweiten Paneels am ersten Paneel unter Berücksichtigung einer Spaltweite (19) zwischen den beiden angrenzenden Längsrändern der Paneele, die zwischen der maximalen Spaltweite und der minimalen Spaltweite liegt, indem man den mittleren Abschnitt (21) der Dichtung in den Spalt einlegt, wobei der Längsrand des zweiten Paneels, der am Spalt anliegt, vom äußeren Abschnitt (22) der Dichtung abgedeckt wird, und
- das Befestigen des ersten Paneels und eines inneren Abschnitts (23) der Dichtung an der Versteifung, sodass der innere Abschnitt (23) der Dichtung zwischen der Versteifung (15) und dem ersten Paneel gehalten wird.

2. Verfahren nach Anspruch 1, **dadurch gekennzeichnet, dass** es die folgenden Zusatzschritte umfasst:
- das Einschieben des Längsrandes von Belang des zweiten Paneels zwischen den inneren Abschnitt (23) und den äußeren Abschnitt (22) der Dichtung (20), sodass sich der besagte innere Abschnitt der Dichtung zwischen der Versteifung (15) und dem besagten Längsrand befindet;
- das Befestigen des zweiten Paneels an der besagten Versteifung, sodass der besagte innere Abschnitt der Dichtung zwischen der besagten Versteifung und dem Längsrand des zweiten Paneels gehalten wird.

3. Verfahren nach Anspruch 2, **dadurch gekennzeichnet, dass** der innere Abschnitt (23) der Dichtung (20) auch an der Versteifung (15) befestigt wird.

4. Paneelverbund eines Gerätes in der Art eines Luftfahrzeugs, wobei die besagten Paneele angepasst sind, um sich zu verformen, und bei dem zwei benachbarte Paneele (13, 14) durch eine Dichtung (20) miteinander verbunden sind, **dadurch gekennzeichnet, dass**
- die Dichtung (20) einen mittleren Abschnitt (21) umfasst, dessen Abmessungen (l1) kleiner sind, als die Abmessungen (L) einer Mindestspaltweite zwischen den beiden benachbarten Paneelen, und einen äußeren Abschnitt (22), der dazu bestimmt ist, an die Außenseite der Verkleidung geführt zu werden, und dessen Abmessungen absolut größer sind, als die Abmessungen (L) einer maximalen Spaltweite, um die Längsränder (16, 17) der Paneele, die den Spalt (19) umgeben, zumindest teilweise abdecken zu können, und sich die besagten Spaltweiten dazu eignen, durch den Paneelverbund toleriert zu werden,
- sich die Dichtung dazu eignet, mittels einer Versteifung (15) auf einem ersten Paneel positioniert, und darauf befestigt zu werden, sodass der äußere Abschnitt (22) der besagten Dichtung einen Längsrand des besagten Paneels abdeckt,
- sich das zweite Paneel dazu eignet, am ersten Paneel positioniert und befestigt zu werden, mit einer Spaltweite (19), die zwischen der maximalen Spaltweite und der minimalen Spaltweite zwischen den beiden benachbarten Längsrändern der Paneele liegt, und mit dem mittleren Abschnitt (21) der Dichtung, der in den Spalt eingelegt wird, wobei der Längsrand des zweiten Paneels, der am Spalt anliegt, vom äußeren Abschnitt (22) der Dichtung abgedeckt werden kann, und
- sich das erste Paneel dazu eignet, an einem inneren Abschnitt (23) der Dichtung an der Versteifung befestigt zu werden, sodass der besagte innere Abschnitt (23) zwischen der Versteifung (15) und dem ersten Paneel gehalten wird.

5. Luftfahrzeug umfassend einen Paneelverbund nach Anspruch 4, der die Außenhaut einer Bauchverkleidung (11) bildet.

## Claims

1. A method of manufacturing a sealed panel assembly of an aircraft-type apparatus, said panels being designed to become deformed, wherein two adjacent panels (13, 14) are fixed to one another, **characterised in that** it comprises the following steps:
- choosing a sealing joint (20) according to a maximum interstice and a minimum interstice between the two adjacent panels (13, 14), capable of being tolerated by the panel assembly,
- using a sealing joint (20) comprising a central part (21), the dimensions (l1) of which are smaller than the dimensions (L) of the minimum interstice, and an external part (22), designed to face towards the exterior of the fairing, the dimensions (l2) of which are strictly greater than the dimensions (L) of the maximum interstice, in order to be able to cover at least partially the longitudinal edges (16, 17) of the panels bordering the interstice (19),
- positioning and connecting
- the sealing joint to a first panel via a stiffener (15), so that the external part (22) of said joint covers a longitudinal edge of said panel, and
- the second panel to the first panel, by creating an interstice (19), included between the maximum and minimum interstices, between the two longitudinal edges adjacent to the panels, by housing the central part (21) of the sealing joint in the interstice, the longitudinal edge of the second panel bordering the interstice being covered by the external part (22) of the sealing joint, and
- fixing the first panel and one internal part (23) of the sealing joint to the stiffener (15), so that the internal part (23) of the sealing joint is held between the stiffener (15) and the first panel.

2. A method according to claim 1, **characterised in that** it comprises the following additional steps:
- slipping the longitudinal edge in question of the second panel between the internal part (23) and the external part (22) of the sealing joint (20), so that said internal part of the sealing joint is situated between the stiffener (15) and said longitudinal edge;
- fixing the second panel to said stiffener, so that said internal part of the sealing joint is held between said stiffener and the longitudinal edge of the second panel.

3. A method according to claim 2, **characterised in that** the internal part (23) of the sealing joint (20) is also fixed to the stiffener (15).

4. A panel assembly of an aircraft-type apparatus, said panels being designed to become deformed, two adjacent panels (13, 14) being fixed to one another by a sealing joint (20), **characterised in that**
- the sealing joint comprises a central part (21), the dimensions (l1) of which are smaller than the dimensions (L) of a minimum interstice between the two adjacent panels, and an external part (22), designed to face towards the exterior of the fairing, the dimensions (l2) of which are strictly greater than the dimensions (L) of a maximum interstice, in order to be able to cover at least partially the longitudinal edges (16, 17) of the panels bordering the interstice (19), said interstices being capable of being tolerated by the panel assembly,
- the sealing joint is capable of being positioned on and connected to a first panel via a stiffener (15), so that the external part (22) of said joint covers a longitudinal edge of said panel,
- the second panel is capable of being positioned on and connected to the first panel, with an interstice (19) included between the maximum and minimum interstices, between the two longitudinal edges adjacent to the panels, with the central part (21) of the sealing joint housed in the interstice, the longitudinal edge of the second panel bordering the interstice being capable of being covered by the external part (22) of the sealing joint, and
- the first panel is capable of being fixed at an internal part (23) of the sealing joint to the stiffener (15), so that said internal part (23) is held between the stiffener (15) and the first panel.

5. An aircraft comprising a panel assembly according to claim 4, forming the outer skin of a ventral fairing (11).
